# EUROPÄISCHE PATENTSCHRIFT

(11) **EP 1 110 776 B1**
(45) Veröffentlichungstag und Bekanntmachung des Hinweises auf die Patenterteilung: **01.02.2006**
(21) Anmeldenummer: 00124015.9
(22) Anmeldetag: 04.11.2000
(51) Int. Cl.: B60J 1/18

(54) **Cabriolet-Fahrzeug mit einer Heckscheibe, die in einer Führungsbahn beweglich ist**
Convertible vehicle equipped with a rear window slidable in a guiding track
Véhicule convertible équipé avec une lunette arrière coulissante dans rail de guidage

(30) Priorität: 24.12.1999 DE 29922812 U
(43) Veröffentlichungstag der Anmeldung: 27.06.2001
(73) Patentinhaber: Wilhelm Karmann GmbH, 49084 Osnabrück (DE)
(72) Erfinder: Maass, Joachim, 49143 Bissendorf (DE)
(74) Vertreter: Busse & Busse Patentanwälte

(56) Entgegenhaltungen:
- DE-C- 853 714
- US-A- 2 836 457
- US-A- 4 543 747

## Beschreibung

Die Erfindung bezieht sich auf ein Cabriolet-Fahrzeug mit einem auffaltbaren, mit einer Heckscheibe versehenen Dach nach dem Oberbegriff des Anspruchs 1.

Ein derartiges z.B. aus der US-A-28 36 457 bekanntes Cabriolet-Fahrzeug kann einerseits mit völlig geöffnetem Dach benutzt werden, und andererseits eröffnet es bei geschlossenem Dach die Möglichkeit, die Heckscheibe separat zu öffnen. Hierfür kann ein modulartiger Schacht vorgesehen sein, der nach oben hin einen abgedichteten Durchtrittsspalt für die Heckscheibe aufweist. Dabei muß sichergestellt sein, daß die Heckscheibe aus einem Dachrahmenteil ohne Verkanten in einen Karosserierahmenteil des Moduls überführbar ist und umgekehrt. Außerdem muß zum Öffnen des Dachs bei in geschlossener Position befindlicher Heckscheibe deren Verschwenkung möglich sein, ohne in Kollision mit dem aufnehmenden und nach oben hin abgedichteten Modul in der Karosserie zu kommen.

Die Erfindung befaßt sich mit dem Problem, diesbezüglich möglichst günstige Verhältnisse zu schaffen.

Die Erfindung löst dieses Problem mit den Merkmalen des Anspruchs 1. Weitere vorteilhafte Ausgestaltungen der Erfindung sind in den Ansprüchen 2 bis 8 angegeben.

Durch die Querverbindung der dreiecksförmigen Spannbügel ist eine hohe Verwindungssteifigkeit des Daches erreicht, es ist vermieden, daß seitliche Teile des Daches gegeneinander verkanten können. Die Präzision der Dachein- und -ausfaltung ist hierdurch erhöht. Somit kann ein sehr genauer Bewegungsablauf, der auch kleine Toleranzen und Abstände der Bauteile zueinander ermöglicht, eingehalten werden.

Durch die erfindungsgemäße Unterbrechung der Führungsbahn ist sichergestellt, daß das Querverbindungsteil beim Auffalten des Daches über die Oberkante des karosserieseitigen Moduls hinweggehoben werden kann, ohne eine Kollision zu verursachen.

Sofern in der Unterbrechung zwei seitliche Zwischenführungsteile angeordnet sind, kann die Heckscheibe mit wenig Spiel in der Führungsbahn bewegt werden. Insbesondere beim Hochfahren aus der Absenkstellung ist die Führung der Scheibe dadurch verbessert.

Das Querverbindungsteil kann beispielsweise als Rohr ausgebildet sein, so daß die Kosten zur Bereitstellung eines solchen Bauteils gering sind.

Eine optisch besonders unauffällige Anordnung des Querverbindungsteils kann erreicht werden, wenn dieses unterhalb der Ebene eines rückwärtigen, im geöffneten Zustand des Daches dieses abdeckenden Deckelteils angeordnet ist. Zur Kollisionsvermeidung bei der Öffnung des Daches kann das Querverbindungsteil mit den mit ihm fest verbundenen Zwischenführungsteilen in einer aufwärts und heckwärts verlaufenden Bewegungsbahn bewegt werden. Derartige Anordnungen sind besonders vorteilhaft in einem Cabriolet-Fahrzeug, bei dem die Heckscheibe auch in geschlossener Stellung im wesentlichen senkrecht steht.

Weitere Vorteile und Einzelheiten ergeben sich aus einem in der Zeichnung dargestellten und nachfolgend beschriebenen Ausführungsbeispiel des Gegenstandes der Erfindung.

In der Zeichnung zeigt:

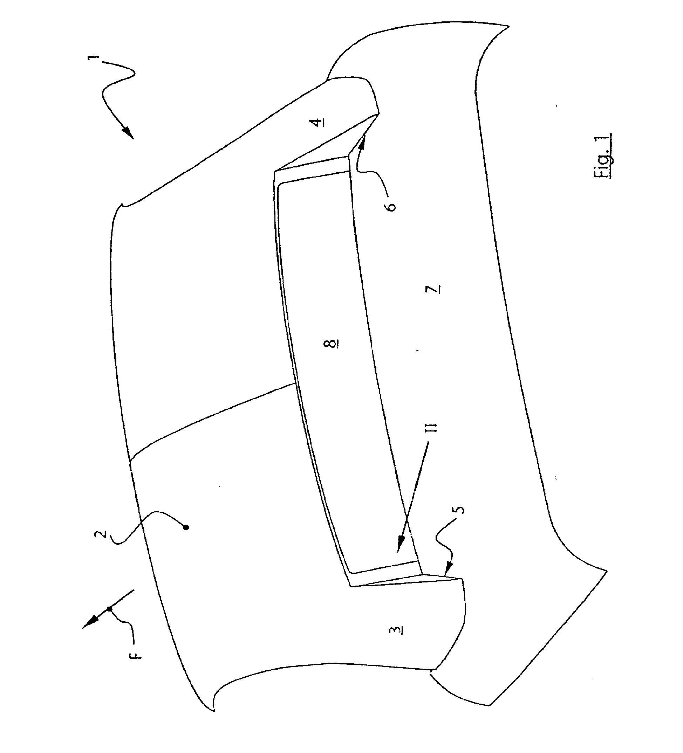

- Fig. 1: eine schematisierte perspektivische Ansicht auf den rückwärtigen Dachbereich eines erfindungsgemäßen Cabriolet-Fahrzeugs,

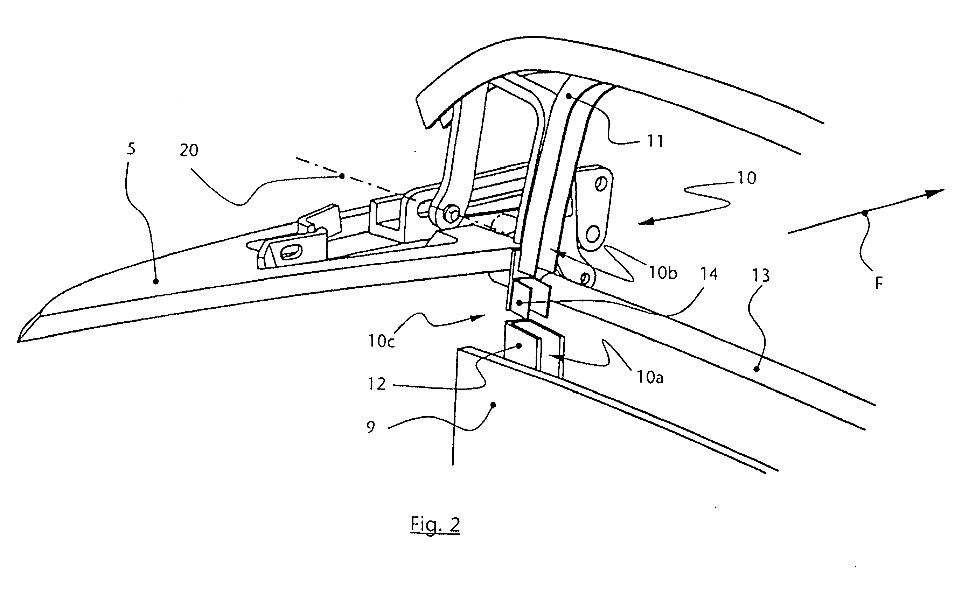

- Fig. 2: einen Blick aus Richtung II auf die das Dach abstützenden Gestängeteile,
- Fig. 3: eine ähnliche Ansicht wie Fig. 2 bei Aufschwenken der hinteren Spannbügel,

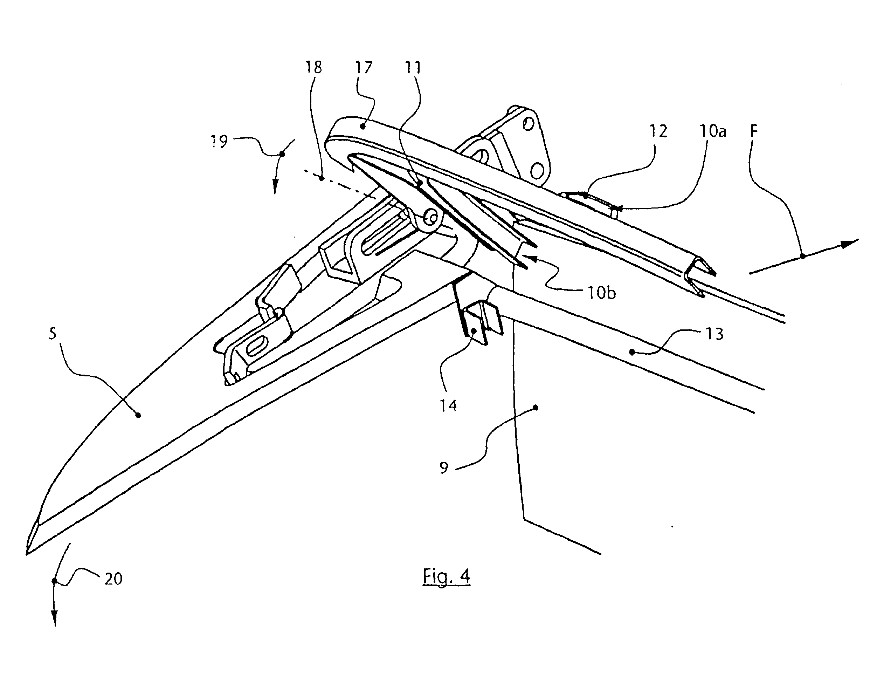

- Fig. 4: eine ähnliche Ansicht wie Fig. 3 während des Auffaltens des Daches,
- Fig. 5: eine ähnliche Ansicht wie Fig. 4 bei vollständig aufgefaltetem Dach.

Das Cabriolet-Fahrzeug 1 umfaßt ein auffaltbares Dach 2, das im Heckbereich zwei seitliche, in Draufsicht im wesentlichen dreiecksförmige Endbereiche 3,4 aufweist, die jeweils von die dreiecksförmige Gestalt durch ihre Umrißkontur bewirkenden Spannbügeln 5,6 auf einem rückwärtigen Deckelteil 7 spannbar sind.

Den seitlichen Endbereichen 3,4 ist eine Heckscheibe 8 in Fahrtrichtung F vor- und zwischengeordnet. Die Heckscheibe 8 steht bei geschlossenem Dach nahezu senkrecht bzw. ist leicht gegen das Lot geneigt. Aus ihrer das Dach 2 nach hinten abschließenden Normalstellung ist die Heckscheibe 8 in eine Absenkstellung beweglich, in der sie in einem karosserieseitigen Modul 9 gehalten ist. Dieses Modul umfaßt seitlich Führungsbahnabschnitte 10a einer Führungsbahn 10. In geschlossener Stellung der Heckscheibe 8 ist diese in einem nach unten offenen, U-förmigen Rahmen 11 gehalten, der seitlich Abschnitte 10b der Führungsbahn 10 zur Auf- und Abbewegung der Heckscheibe 8 umfaßt. Zwischen dem Dachrahmenteil 11 und dem Karosserierahmenteil 12 befindet sich eine Unterbrechung 10c der Führungsbahn 10, so daß die Teilabschnitte 10a und 10b voneinander vertikal beabstandet sind.

Die seitlichen Spannbügel 5,6 sind über ein Querverbindungsteil 13, hier als Rohr ausgebildet, miteinander verbunden. Es kommen auch Strangpreßprofile oder andere Längsbauteile in Frage. Im Bereich 10c der Unterbrechung der Führungsbahn sind Zwischenführungsteile 14 angeordnet, die fest mit dem Querverbindungsteil 13 verbunden sind und die in geschlossener Stellung des Daches 2 fluchtend mit der Führungsbahn 10 ausgerichtet sind, also die Abschnitte 10a und 10b weiterführend fortsetzen. Die Zwischenführungsteile 14 haben im Ausführungsbeispiel einen U-förmigen Querschnitt, ebenso wie das Dachrahmenteil 11 und das Karosserierahmenteil 12. Es kommen auch L-förmige Führungen je nach Ausbildung zumindest teilweise in Betracht.

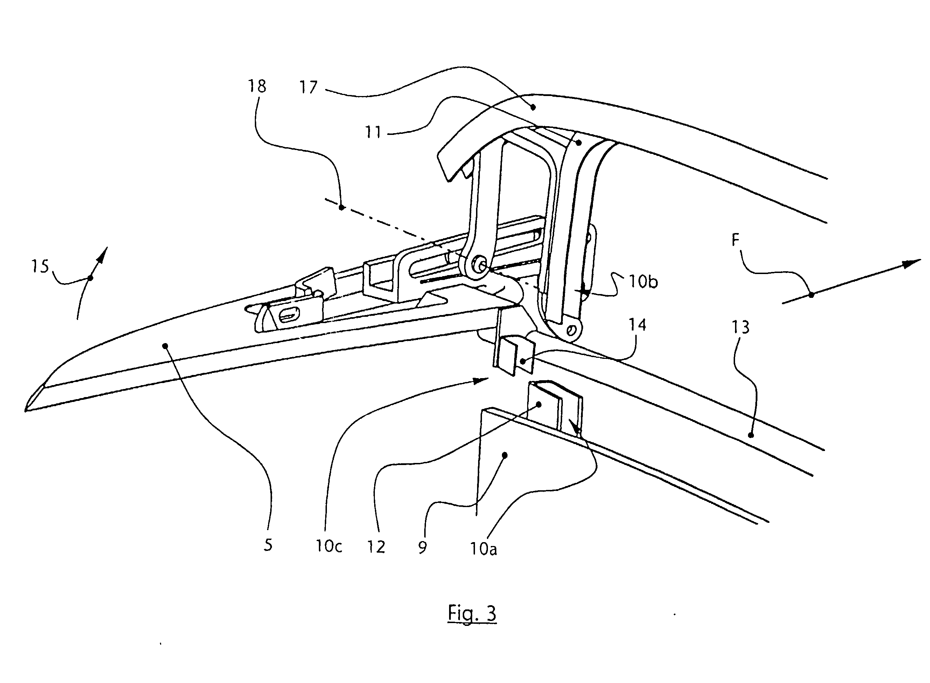

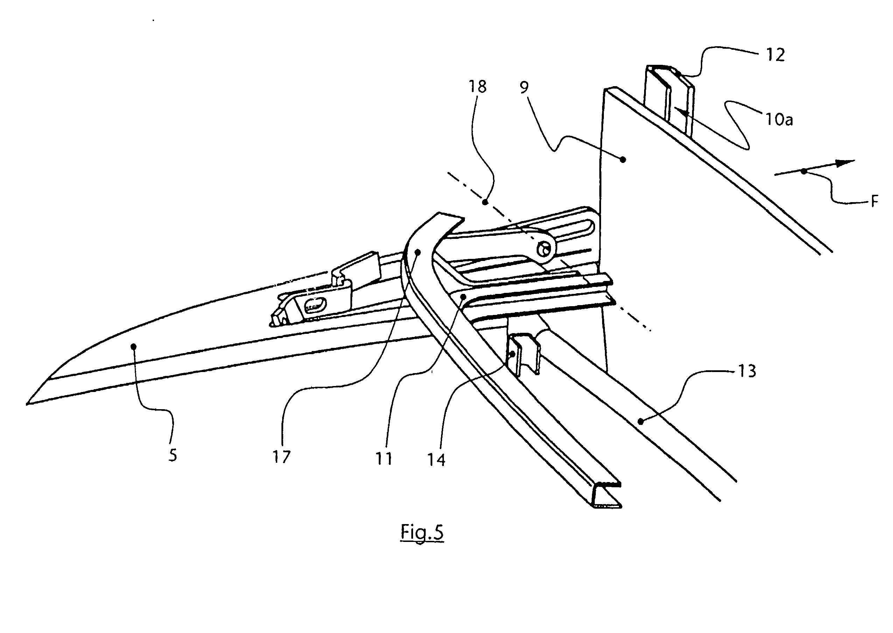

Zur Öffnung des Daches werden bei geschlossener Heckscheibe 8 zunächst die seitlichen Spannbügel 5 und 6 aufwärts verschwenkt, wobei das in geschlossener Stellung unterhalb der Moduloberkante gehaltene Querverbindungsteil 13 durch die Unterbrechung 10c mit dem Zwischenführungsteil 14 hindurchtritt und dadurch (Fig. 3) das Aufschwenken der hinteren Spannbügel 5,6 in Richtung der Pfeile 15 ermöglicht. Das Querverbindungsteil 13 wird dabei über das Karosserierahmenteil 12 hinweggehoben, ohne mit dem Modul 9 oder den seitlichen Karosserierahmenteilen 12 zu kollidieren. Zum weiteren Auffalten des Daches 2 wird das Dachrahmenteil 11 als Bestandteil eines hinteren Querrahmenteils 17 um die Schwenkachse 18 in Richtung des Pfeils 19 verschwenkt. Die Spannbügel 5,6 werden dabei in Richtung des Pfeils 20 abwärts verlagert. In vollständig aufgefalteter Stellung (Fig. 5) liegt sowohl das Querverbindungsteil 13 als auch das Zwischenführungsteil 14, das mit ersterem fest verbunden ist, ebenso wie das Dachrahmenteil 11 weit unter der Oberkante der seitlichen Führungsschiene 12 des Moduls 9, über die die Spannbügel 5,6 mit ihrem Querverbindungsteil 13 hinweggehoben wurde. Die Bewegungsbahn des Querverbindungsteils 13 war daher zunächst aufwärts und heckwärts verlaufend und ist beim weiteren Öffnen des Daches im wesentlichen abwärts gerichtet. Insgesamt ist daher für das Querverbindungsteil 13 eine in Seitenansicht überlagerte Bewegungsbahn aus einer Hub- und einer Schwenkbewegung erreicht, der auch die mit dem Querverbindungsteil 13 fest verbundenen Spannbügel 5,6 folgen. Dieses kann insbesondere erreicht werden über eine Steuerstange, die über einen Schwenklenker und einem Zuglenker mit einem hinteren Dachrahmenteil verbunden ist, wobei ein Lager der Steuerstange in einer Langlochkulisse geführt ist, um die Hubbewegung zu erreichen.

Die Zwischenführungsteile 14 können ebenso wie das Querverbindungsteil 13 aus Stahl bestehen, um hierdurch eine hinreichende mechanische Stabilität zu gewährleisten. Für die Zwischenführungsteile 14 kommen auch andere Materialien, etwa auch Kunststoff, in Betracht. Es ist auch möglich, die Unterbrechung 10c ohne Zwischenführungsstück 14 zu belassen.

## Patentansprüche

1. Cabriolet-Fahrzeug (1) mit einem auffaltbaren, mit einer Heckscheibe (8) versehenen Dach (2), das heckseitig zwei seitliche Spannbügel (5;6) aufweist, wobei die Heckscheibe (8) in einer Führungsbahn (10) mit einem dem Dach (2) zugeordneten Dachrahmenteil (11) und einem der Karosserie zugeordneten Karosserierahmenteil (12) beweglich gehalten ist und in geschlossener Stellung des Daches (2) zumindest bereichsweise aus einer geschlossenen Normalstellung in eine Absenkstellung beweglich ist, **dadurch gekennzeichnet, daß** die Spannbügel (5;6) in Draufsicht im wesentlichen dreiecksförmig und über ein Querverbindungsteil (13) miteinander fest verbunden sind, und daß zwischen dem Dachrahmenteil (11) und dem Karosserierahmenteil (12) eine Unterbrechung (10c) der Führungsbahn (10) zum Durchtritt des Querverbindungsteils (13) während des Auffaltens des Daches (2) vorgesehen ist.

2. Cabriolet-Fahrzeug nach Anspruch 1, **dadurch gekennzeichnet, daß** in der Unterbrechung (10c) zwei seitliche, fluchtend mit der Führungsbahn (10b) des Dachrahmenteils (11) und (10a) des Karosserierahmenteils (12) ausrichtbare Zwischenführungsteile (14) angeordnet sind.

3. Cabriolet-Fahrzeug nach Anspruch 2, **dadurch gekennzeichnet, daß** die Zwischenführungsteile (14) mit dem Querverbindungsteil (13) fest verbunden sind.

4. Cabriolet-Fahrzeug nach einem der Ansprüche 2 oder 3, **dadurch gekennzeichnet, daß** die Zwischenführungsteile (14) einen L- oder U-förmigen Querschnitt aufweisen.

5. Cabriolet-Fahrzeug nach einem der Ansprüche 1 bis 4, **dadurch gekennzeichnet, daß** die Führungsbahn (10) für die Heckscheibe (8) sowohl im Dachrahmenteil (11) als auch im Karosserierahmenteil (12) einen U- oder L-förmigen Querschnitt aufweist.

6. Cabriolet-Fahrzeug nach einem der Ansprüche 1 bis 5, **dadurch gekennzeichnet, daß** das Querverbindungsteil (13) als Rohr ausgebildet ist.

7. Cabriolet-Fahrzeug nach einem der Ansprüche 1 bis 6, **dadurch gekennzeichnet, daß** das Querverbindungsteil (13) im geschlossenen Zustand des Daches (2) unterhalb der Ebene eines rückwärtigen, im geöffneten Zustand des Daches dieses abdeckenden Deckelteils (7) angeordnet ist.

8. Cabriolet-Fahrzeug nach Anspruch 7, **dadurch gekennzeichnet, daß** zur Öffnung des Daches (2) das Querverbindungsteil (13) mit den Zwischenführungsteilen (14) in einer zunächst aufwärts und heckwärts verlaufenden Bewegungsbahn bewegbar ist.

## Claims

1. Convertible vehicle (1) having a foldable roof (2) which is provided with a rear window (8) and which has, at the rear, two tensioning bows (5, 6), the rear window (8) being movably held in a guide track (10) having a roof frame-part (11) associated with the roof (2) and a bodywork frame-part (12) associated with the bodywork and being movable, when the roof (2) is in the raised position, at least in part from a raised normal position to a lowered position, **characterised in that** the tensioning bows (5, 6) are substantially triangular when seen in plan and are connected solidly together by a transverse connecting part (13), and **in that** an interruption (10c) in the guide track (10) is provided between the roof frame-part (11) and the bodywork frame-part (12), to allow the transverse connecting part (13) to pass through during the folding of the roof (2).

2. Convertible vehicle according to claim 1, **characterised in that** arranged in the interruption (10c) are two lateral intermediate guide parts (14) which can be orientated to align with the guide track (10b) of the roof-frame part (11) and the guide track (10a) of the bodywork-frame part (12).

3. Convertible vehicle according to claim 2, **characterised in that** the intermediate guide parts (14) have a fixed connection to the transverse connecting part (13).

4. Convertible vehicle according to either of claims 2 and 3, **characterised in that** the intermediate guide parts (14) are of L-shaped or U-shaped cross-section.

5. Convertible vehicle according to one of claims 1 to 4, **characterised in that** the guide track (10) for the rear window (8) is of U-shaped or L-shaped cross-section both in the roof-frame part (11) and in the bodywork-frame part (12).

6. Convertible vehicle according to one of claims 1 to 5, **characterised in that** the transverse connecting part (13) is in the form of a tube.

7. Convertible vehicle according to one of claims 1 to 6, **characterised in that**, when the roof (2) is in the raised state, the transverse connecting part (13) is arranged below the plane of a rear cover part (7) which covers the roof when the latter is in the lowered state.

8. Convertible vehicle according to claim 7, **characterised in that**, to lower the roof (2), the transverse connecting part (13), together with the intermediate guide parts (14), can be moved along a path of movement which extends initially upwards and towards the rear of the vehicle.

## Revendications

1. Cabriolet (1) comportant un toit pliable (2) équipé d'une lunette arrière (8) qui présente des étriers de tension (5 ; 6) latéraux et qui peut se déplacer en étant maintenue dans une piste de guidage (10) composée d'une partie de cadre de toit (11) associée au toit (2) et d'une partie de cadre de carrosserie (12) associée à la carrosserie, cette lunette (8), pouvant passer au moins localement d'une position normale fermée à une position abaissée, lorsque le toit (2) est fermé
**caractérisé en ce que**
les étriers de tension (5 ; 6), vus en plan, ont une forme essentiellement triangulaire et sont solidarisés par une partie de liaison transversale (13), une interruption (10c) de la piste de guidage (10) étant prévue entre la partie de cadre de toit (11) et la partie de cadre de carrosserie (12) pour le passage de la partie de liaison transversale (13) pendant l'abaissement du toit (2).

2. Cabriolet selon la revendication 1,
**caractérisé en ce que**
dans l'interruption (10c) se trouvent deux parties de guidage intermédiaire (14) latérales, qui peuvent être alignées avec la piste de guidage (10b) de la partie de cadre de toit (11) et celle (10a) de la partie de cadre de carrosserie (12).)

3. Cabriolet selon la revendication 2,
**caractérisé en ce que**
les parties de guidage intermédiaire (14) sont solidaires de la partie de liaison transversale (13).

4. Cabriolet selon la revendication 2 ou 3,
**caractérisé en ce que**
les parties de guidage intermédiaire (14) ont une section en forme de L ou de U.

5. Cabriolet selon une des revendications 1 à 4,
**caractérisé en ce que**
la piste de guidage (10) de la lunette arrière (8) présente une section en forme de U ou de L, à la fois dans la partie de cadre de toit (11) et dans la partie de cadre de carrosserie (12).

6. Cabriolet selon une des revendications 1 à 5,
**caractérisé en ce que**
la partie de liaison transversale (13) est un tube.

7. Cabriolet selon une des revendications 1 à 6,
**caractérisé en ce que**
la partie de liaison transversale (13), quand le toit (2) est fermé, se trouve en dessous du plan d'une partie de toit (7) située vers l'arrière et qui recouvre ce toit quand il est ouvert.

8. Cabriolet selon la revendication 7,
**caractérisé en ce que**
pour ouvrir le toit (2), la partie de liaison transversale (13) avec les parties de guidage intermédiaire (14) peut être déplacée dans une piste de guidage dirigée tout d'abord vers le haut et vers l'arrière.
